(19) Europäisches Patentamt
European Patent Office
Office européen des brevets

(11) EP 0 917 790 B1

(12) **FASCICULE DE BREVET EUROPEEN**

(45) Date de publication et mention
de la délivrance du brevet:
**22.02.2006 Bulletin 2006/08**

(21) Numéro de dépôt: **97936733.1**

(22) Date de dépôt: **31.07.1997**

(51) Int Cl.:
**H04L 27/38** $^{(2006.01)}$     **H04N 5/455** $^{(2006.01)}$

(86) Numéro de dépôt international:
**PCT/FR1997/001446**

(87) Numéro de publication internationale:
**WO 1998/006206 (12.02.1998 Gazette 1998/06)**

(54) **DEMODULATEUR A CIRCUIT NUMERIQUE DE RECUPERATION DE PORTEUSE ET DE RYTHME**

DEMODULATOR MIT DIGITALER TRÄGER- UND TAKTRÜCKGEWINNUNGSSCHALTUNG

DEMODULATOR WITH DIGITAL CIRCUIT FOR RECOVERING CARRIER AND RHYTHM

(84) Etats contractants désignés:
**BE CH DE FI FR GB IT LI NL SE**

(30) Priorité: **07.08.1996 FR 9610100**

(43) Date de publication de la demande:
**26.05.1999 Bulletin 1999/21**

(73) Titulaire: **SAT (Société Anonyme de Télécommunications)**
**75116 Paris (FR)**

(72) Inventeurs:
• **KARAM, Georges, Michel**
**F-75012 Paris (FR)**
• **MAALEJ, Khaled**
**F-94400 Vitry sur Seine (FR)**

(74) Mandataire: **Cabinet Martinet & Lapoux**
**43, Boulevard Vauban,**
**B.P. 405,**
**Guyancourt**
**78055 St. Quentin Yvelines Cedex (FR)**

(56) Documents cités:
EP-A- 0 211 758     EP-A- 0 428 226
EP-A- 0 458 452     EP-A- 0 609 095
US-A- 5 425 057     US-A- 5 612 975

• W. M. WATERS AND B. R. JARRETT: "Bandbass Signal Sampling and Coherent Detection" IEEE TRANSACTIONS ON AEROSPACE AND ELECTRONIC SYSTEMS., vol. 18, no. 4, novembre 1982, NEW YORK US, pages 731-736, XP002042767
• TAUB H., SCHILLING D. L.: "PRINCIPLES OF COMMUNICATION SYSTEMS" PRINCIPLES OF COMMUNICATION SYSTEMS, 1986, NEW YORK US, XP002029535

EP 0 917 790 B1

Printed by Jouve, 75001 PARIS (FR)

**Description**

La présente invention concerne un démodulateur à circuit de récupération de porteuse et de rythme au moins partiellement numérique. Un tel démodulateur est inclus dans un récepteur d'un système de transmission numérique dans lequel un émetteur émet un signal de modulation obtenu par une modulation d'amplitude et/ou de phase d'une porteuse par un signal de données numérique. Le démodulateur restitue par démodulation cohérente du signal modulé le signal de données. Le signal de données numérique peut être par exemple un signal de télévision numérique transmis entre des relais à radiofréquence ou à travers des liaisons par satellite.

A titre d'exemple, l'invention a trait à un démodulateur démodulant un signal modulé à radiofréquence qui résulte initialement d'une modulation d'amplitude en quadrature MAQ. Une modulation MAQ fait correspondre à chaque symbole à n bits du signal de données numérique un état parmi $N = 2^n$ états dans chacun de deux signaux de modulation dans lesquels deux composantes en quadrature de phase d'une même porteuse sont modulées en amplitude par $2^n$ niveaux de deux signaux de symbole parallèles. En pratique, le nombre N peut être égal à 4, 16, 32, 64, 128 ou 256. La fréquence de la porteuse est supérieure à la fréquence des symboles.

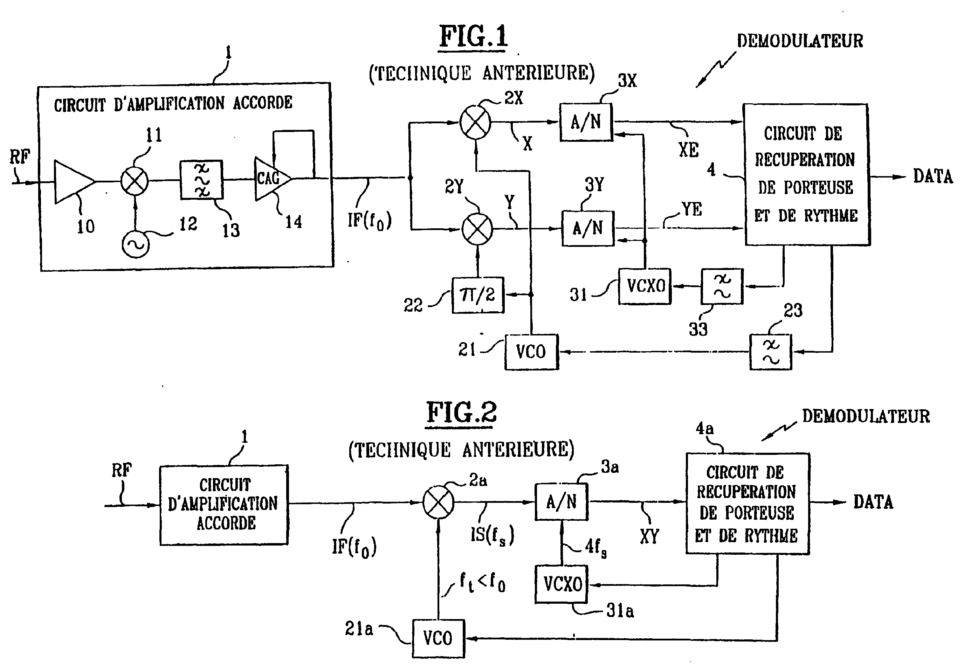

Les démodulateurs connus à circuit numérique de récupération de porteuse et de rythme présentent essentiellement deux types d'architecture montrés aux figures 1 et 2.

En référence à la figure 1, dans un récepteur à radiofréquence, un démodulateur conventionnel est précédé d'un circuit d'amplification accordé à radiofréquence 1 qui reçoit un signal modulé à radiofréquence RF, typiquement entre 47 et 850 MHz. Le circuit d'amplification 1 comprend successivement, d'une manière connue, un amplificateur à radiofréquence à faible bruit 10, un mélangeur 11 relié à un oscillateur local 12 de manière à transposer la fréquence du signal RF à une fréquence intermédiaire $f_0$ typiquement égale à 43,75 MHz, un filtre passe-bande 13 pour éliminer les harmoniques de la fréquence du signal RF, et un circuit d'amplification à commande de gain automatique 14.

Le démodulateur comprend une partie analogique 2 et une partie numérique 3. L'invention concerne plus particulièrement la partie analogique du démodulateur.

La partie analogique comporte deux mélangeurs 2X et 2Y faisant office chacun de démodulateur. Les mélangeurs démodulent un signal modulé IF à fréquence intermédiaire $f_0$ qu'ils reçoivent du circuit 1 à des premières entrées, en deux signaux analogiques en bande de base X et Y correspondant aux deux signaux de symbole modulant les deux composantes en quadrature de phase de la porteuse dans l'émetteur. La démodulation de phase est réalisée grâce à un signal de porteuse récupérée produit par un oscillateur commandé en tension (VCO) 21 et appliqué directement et à travers un déphaseur de 90° 22 à des secondes entrées des mélangeurs 2X et 2Y. Les signaux analogiques X et Y sortant des mélangeurs 2X et 2Y sont appliqués à des convertisseurs analogiques-numériques 3X et 3Y. Un signal d'horloge récupéré à la fréquence de symbole est appliquée par un oscillateur commandé en tension (VCXO) 31 à des entrées d'horloge d'échantillonnage des convertisseurs 3X et 3Y de manière à fournir des signaux de symbole numériques XE et YE à la fréquence de symbole récupérée.

Les signaux numériques XE et YE sont appliqués à un circuit de récupération de porteuse et de rythme 4 qui constitue la partie numérique du démodulateur et qui est sous la forme d'un circuit intégré pour application spécifique (ASIC).

Le circuit 4 comprend deux parties numériques qui avec les oscillateurs 21 et 31 constituent deux boucles à verrouillage de phase numériques-analogiques. La première partie numérique compense une erreur de phase à estimer entre la porteuse de modulation émise initialement et la porteuse récupérée. Le premier oscillateur 21 est ainsi asservi à la fréquence et à la phase de la porteuse de modulation en fonction d'un signal d'erreur généré par comparaison de phase dans le circuit 4 et à travers un filtre analogique passe-bas de boucle 23 rejetant des composantes à haute fréquence. La seconde partie numérique dans le circuit 4 établit en dépendance des signaux de symbole XE et YE un signal d'erreur commandant en tension le second oscillateur 31 à travers un second filtre analogique passe-bas 33 de manière à régénérer le signal d'horloge récupéré à la fréquence de symbole servant à l'échantillonnage dans les convertisseurs 3X et 3Y.

Le signal de données numérique DATA est finalement régénéré dans une partie numérique de décodage inclus dans le circuit 4 en discriminant les niveaux d'amplitude dans les deux signaux de symbole synchronisés par comparaison à des seuils de décision.

Les inconvénients de cette architecture conventionnelle de démodulateur consistent principalement en un déséquilibre de gain entre les deux voies parallèles des signaux de symbole X et Y, des bouclages de la partie numérique 4 sur la partie analogique, c'est-à-dire à travers les filtres 23 et 33 et les oscillateurs 21 et 31, pour contrôler la fréquence de la porteuse de démodulation et la fréquence d'échantillonnage, et un coût relativement élevé du démodulateur en raison des deux convertisseurs analogiques-numériques 3X et 3Y et des deux oscillateurs 21 et 31.

Dans un démodulateur plus récent montré à la figure 2, les deux voies de signaux de symbole X et Y sont remplacées par une seule voie de manière à supprimer un convertisseur analogique-numérique 3a, et les signaux numériques de symbole XE et YE sont produits dans un circuit de récupération de porteuse et de rythme numérique 4a qui offre par ailleurs des fonctions analogues à celles du circuit 4.

Le démodulateur plus récent comprend un mélangeur 2a entre la sortie du circuit d'amplification accordé à radiofréquence 1, et l'unique convertisseur analogique-numérique 3a. Le mélangeur 2a reçoit par une première entrée le signal modulé IF à fréquence intermédiaire $f_0$ et par une seconde entrée un signal à une fréquence de transposition $f_t$ produit par un oscillateur (VCO) 21a commandé en tension par un signal d'erreur filtré fourni par le circuit 4a et sensiblement inférieure à $f_0$. La fréquence de transposition $f_t$ est telle que le mélangeur 2a abaisse la fréquence $f_0$ du signal intermédiaire IF à une fréquence porteuse égale à la fréquence $f_s = f_0 - f_t$ des symboles dans le signal de données initial. Le convertisseur analogique-numérique 3a échantillonne un signal intermédiaire analogique IS de fréquence $f_s$ sortant du mélangeur 2a en fonction d'un signal d'horloge à une fréquence d'échantillonnage $4f_s$ égale à quatre fois la fréquence de symbole, produit par un oscillateur (VCXO) 31a commandé en tension par le circuit 4a. Le signal numérique d'échantillon XY résultant de l'échantillonnage à la fréquence $4f_s$ du signal intermédiaire IS et sortant du convertisseur 3a est appliqué dans un circuit numérique de conversion prévu à l'entrée du circuit 4a qui convertit le signal XY en deux signaux de symbole numériques à la fréquence $4f_s$. Ces derniers signaux numériques sont ensuite filtrés et analysés pour récupérer les signaux de symbole numériques en bande de base à la fréquence $f_s$. Le circuit numérique 4a comprend également un moyen numérique de récupération de porteuse et un moyen numérique de récupération de rythme pour respectivement commander les oscillateurs 21a et 31a, ainsi qu'un moyen de décodage pour régénérer le signal de données numérique DATA.

Bien que ce démodulateur récent remédie à la plupart des inconvénients du démodulateur conventionnel illustré à la figure 1, il présente encore l'inconvénient d'un coût relativement élevé en raison de la commande par le circuit numérique 4a de la transposition de fréquence et de l'échantillonnage à travers des moyens analogiques tels que l'oscillateur 21a et le mélangeur 2a, et l'oscillateur 31a.

Ce second démodulateur connu est également difficile à mettre en oeuvre dans un système de télécommunication où la fréquence de symbole $f_s$ est variable. En effet, la fréquence intermédiaire $f_0$ étant fixe, la fréquence d'échantillonnage $4f_s$ doit s'ajuster en fonction de la fréquence $f_s$, laquelle est la fréquence porteuse du signal intermédiaire IS. Il en résulte que la fréquence de symbole est liée à la fréquence intermédiaire f, ce qui empêche une démodulation d'un signal à rapidité de modulation (débit de symbole) variable et à fréquence intermédiaire constante.

En outre, le mélangeur 2a est un organe non linéaire qui introduit une dégradation dans le signal à fréquence basse IS, et donc un taux d'erreur linéaire conséquent. L'oscillateur local 21a auquel est relié le mélangeur 2a produit un bruit de phase s'ajoutant au bruit du signal utile, et par suite accentue la dégradation du signal numérique traité dans le circuit 4a.

Par ailleurs, selon la demande de brevet EP-A-0 428 226, un démodulateur pour démoduler un signal à modulation d'amplitude en quadrature reçoit un signal à une fréquence intermédiaire $f_{ZF2}$. Le démodulateur comprend en entrée un convertisseur analogique-numérique suivi d'un moyen de conversion pour convertir le signal numérique sortant du convertisseur en les deux signaux classiques en quadrature I et Q lesquels sont appliqués à un interpolateur et à deux filtres adaptés. Une base de temps est reliée à une horloge produisant un signal égal à $4.f_{ZF2}$. La fréquence d'échantillonnage $f_i$ appliquée au convertisseur analogique-numérique est égale à $f_{ZF2}/2$ et la fréquence du signal de commande Q1 appliquée au commutateur à l'entrée du moyen de conversion est égale à $f_{ZF2}/4$.

De plus, le signal à la fréquence intermédiaire $f_{ZF2}$ est produit par un mélangeur qui transpose la fréquence porteuse d'un signal à une fréquence intermédiaire plus élevée $f_{ZF1}$ au moyen d'un oscillateur commandé par l'horloge. Le rapport entre la deuxième fréquence intermédiaire $f_{ZF2}$ et la fréquence d'horloge, et donc avec la fréquence de symbole appliquée au commutateur est fixe, la fréquence de l'horloge contrôlant la deuxième fréquence intermédiaire $f_{ZF2}$. Le démodulateur ne peut donc être utilisé pour un signal à démoduler dont la fréquence de symbole est variable.

La présente invention vise à remédier aux inconvénients des démodulateurs connus précédents en fournissant un démodulateur pouvant démoduler un signal à débit de symbole variable, et ne comprenant plus de partie analogique composée de mélangeur(s) et d'oscillateurs. Le coût du démodulateur selon l'invention en est d'autant plus réduit. En outre, la dépendance de la partie analogique vis-à-vis de la fréquence de symbole $f_s$ est supprimée, la fréquence $f_s$ pouvant être variable.

A cette fin, un démodulateur recevant un signal analogique à une fréquence porteuse intermédiaire résultant d'une modulation de deux composantes en quadrature d'une porteuse par des symboles à une fréquence de symbole variable et comprenant un unique convertisseur analogique-numérique suivi d'un moyen de récupération de porteuse et de rythme auquel un signal numérique de symbole à décoder est appliqué par le convertisseur, est caractérisé en ce que le convertisseur analogique-numérique est adapté à échantilloner le signal analogique à la fréquence porteuse intermédiaire à une fréquence d'échantillonnage fixe inférieure à la fréquence porteuse intermédiaire et supérieure au moins au double d'une fréquence de symbole maximale en ledit signal numérique de symbole, la fréquence porteuse intermédiaire étant indépendante de variations de la fréquence de symbole.

Ainsi comparativement au démodulateur selon la figure 2, le mélangeur 2a et les deux oscillateurs 21a et 31a sont supprimés.

En outre, puisque la fréquence porteuse intermédiaire est indépendante de variations de la fréquence de symbole, le démodulateur démodule un signal à différentes fréquences de symbole.

De préférence, la fréquence d'échantillonnage est supérieure au quadruple de ladite fréquence de symbole maximale de manière à améliorer la qualité des données numériques démodulées.

Puisque la fréquence d'échantillonnage est inférieure à la fréquence porteuse intermédiaire, le signal analogique est sous-échantillonné. L'invention évite alors tout recouvrement de la bande utile du signal à échantillonner grâce à une fréquence d'échantillonnage $f_e$ telle que

$$2(f_0+B_2)/(k+1) \leq f_e \leq 2(f_0-B_1)/k,$$

où $f_0$ est la fréquence porteuse intermédiaire, $f_0 - B_1$ et $f_0 + B_2$ sont les fréquences minimale et maximale de la bande de fréquence utile $B_1 + B_2$ du signal de symbole, et k est un nombre entier.

Le convertisseur analogique-numérique selon l'invention assure une fonction de transposition de fréquence porteuse, comme selon la technique antérieure. La fréquence d'échantillonnage $f_e$ et la fréquence porteuse intermédiaire $f_0$ peuvent être liées par la relation :

$$f_0 + m.f_e = \pm (f_e/4)$$

où m est un nombre entier, positif ou négatif.

Dans le démodulateur selon l'invention, les deux oscillateurs de boucle dans la partie analogique des démodulateurs selon la technique antérieure sont supprimés, et le circuit de récupération de porteuse et de rythme est entièrement numérique. En particulier, la fréquence d'échantillonnage est produite dans le moyen de récupération de porteuse et de rythme par un moyen divisant par 2 la fréquence d'un signal d'horloge local en la fréquence d'échantillonnage.

Selon l'invention, le moyen de récupération de porteuse et de rythme est un circuit numérique. Ce circuit comprend un moyen pour convertir des échantillons à une fréquence multiple de la fréquence de symbole sortant du convertisseur analogique-numérique en des signaux de symbole à la fréquence de symbole, un moyen pour égaliser les signaux de symbole en des signaux de symbole égalisés, et un moyen numérique recevant les signaux de symbole égalisés pour récupérer la porteuse.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 est un bloc-diagramme schématique d'un démodulateur pour modulation MAQ à deux voies analogiques en quadrature selon la technique antérieure et déjà commenté;
- la figure 2 est un bloc-diagramme schématique d'un démodulateur pour modulation MAQ comprenant un mélangeur et deux oscillateurs et un seul convertisseur analogique-numérique selon la technique antérieure et déjà commenté;
- la figure 3 est un bloc-diagramme schématique d'un démodulateur pour modulation MAQ selon l'invention; et
- la figure 4 est un diagramme de fréquence montrant le spectre d'un signal en sortie du convertisseur analogique-numérique inclus dans le démodulateur selon l'invention.

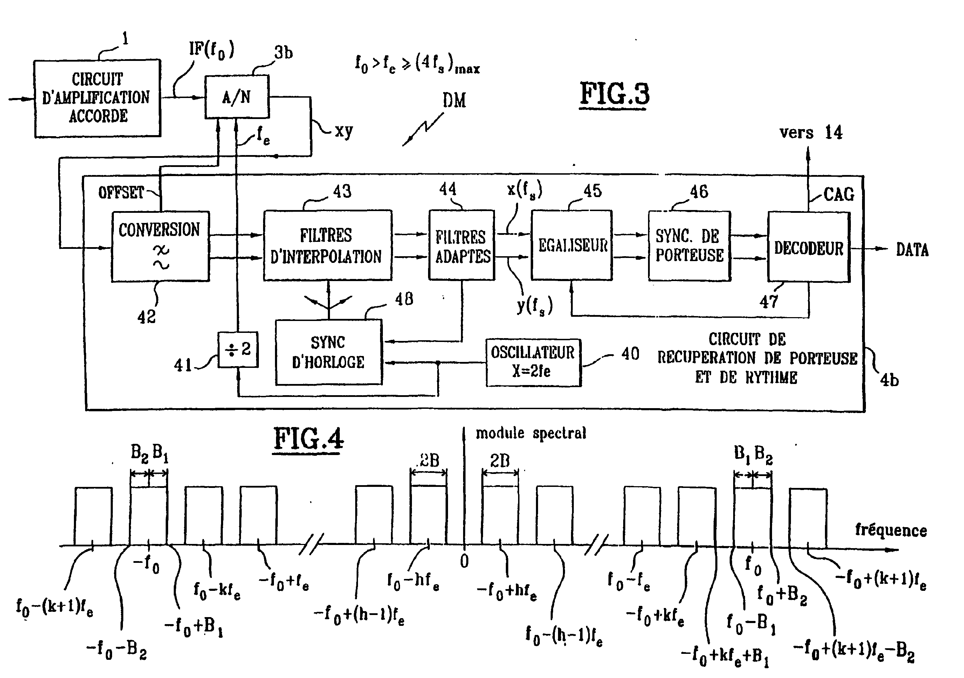

Comme montré à la figure 3, le démodulateur DM selon l'invention est composé essentiellement d'un unique convertisseur numérique-analogique 3b et d'un circuit de récupération de porteuse et de rythme 4b.

Le démodulateur DM reçoit un signal modulé IF à fréquence intermédiaire $f_0$ d'un circuit d'amplification accordé 1, du type de celui montré à la figure 1. Le signal à fréquence intermédiaire $f_0$ est appliqué directement à l'entrée du convertisseur numérique-analogique 3b dont une entrée d'horloge reçoit un signal d'horloge à une fréquence d'échantillonnage $f_e$ inférieure à la fréquence porteuse intermédiaire $f_0$. Le convertisseur 3b produit un signal numérique d'échantillon xy qui est appliqué à un circuit numérique de récupération de porteuse et de rythme 4b de préférence sous la forme d'un circuit intégré pour application spécifique (ASIC). Dans le circuit 4b, un circuit de conversion et de filtrage passe-bas 42, des filtres d'interpolation 43 et des filtres adaptés 44 connectés en cascade convertissent le signal numérique xy en deux signaux numériques de symbole x et y respectivement aux fréquences $4f_s$, $2f_s$ et $f_s$.

Le circuit 4b présente des fonctionnalités analogues à celles du circuit de récupération de porteuse et de rythme 4a selon la technique antérieure illustrée à la figure 2, à l'exception de la production de la fréquence d'échantillonnage qui est de préférence supérieure au quadruple de la fréquence des symbole $f_s$, et non au double de la fréquence de symboles pour améliorer la qualité des données démodulées. Plus généralement, la fréquence d'échantillonnage $f_e$ est supérieure au moins au double de la fréquence de symbole maximale $(f_s)_{max}$ afin que la fréquence d'échantillonnage $f_e$ soit indépendante de la rapidité de modulation (débit de symbole), et par conséquent afin que la fréquence intermédiaire

$f_0$ soit indépendante des variations de la fréquence de symbole $f_s$. Selon la réalisation illustrée, un diviseur de fréquence par 2, 41a, reçoit un signal d'horloge à la fréquence de fonctionnement $2f_e$ d'un oscillateur local 40 et applique directement un signal d'horloge à la fréquence d'échantillonnage $f_e > (4f_s)_{max}$ à l'entrée d'horloge d'échantillonnage du convertisseur analogique-numérique 3b.

Comparativement au démodulateur connu selon la figure 2, le convertisseur analogique-numérique 3b dans le démodulateur DM selon l'invention abaisse également, comme le mélangeur 2a, la fréquence porteuse de la valeur $f_0$ à une valeur $f_1$, tout en échantillonnant à une fréquence $f_e$ supérieure au double $2f_1$ de la fréquence "porteuse" du signal "transposé". Toutefois, la fréquence d'échantillonnage $f_e$ est inférieure à la fréquence $f_0$ de la porteuse dans le signal IF entrant dans le convertisseur. Le signal modulé à fréquence intermédiaire IF est alors "sous-échantillonné" et devrait contenir un recouvrement spectral. Cependant, de manière à récupérer la partie utile du spectre du signal modulé initial en "basse fréquence", celle-ci ne doit pas être recouverte.

Afin de fixer les idées, un exemple numérique est présenté ci-après, dans le cadre de la réception d'un signal numérique de télévision reçu à la fréquence intermédiaire $f_0 = 43,75$ MHz avec une bande de fréquence utile [$f_0 - B_1$, $f_0 + B_2$] de largeur $B_1 + B_2 = 2B = 6$ MHz, et un débit maximum de symbole $f_s = 5,2$ Mbaud. Initialement, dans un émetteur, le signal de télévision numérique en bande de base a subi une modulation d'amplitude en quadrature, par exemple une modulation MAQ-256. Le spectre utile n'est pas recouvert lorsque les conditions suivantes sont satisfaites:

1) $f_e \geq 2(B_1 + B_2)$ en accord avec le théorème d'échantillonnage qui impose que la fréquence d'échantillonnage doit être supérieure au double de la fréquence maximale de la bande de fréquence utile du signal à échantillonner pour pouvoir reconstruire des échantillons à des instants intermédiaires ;

2) Pour pouvoir retrouver la bande utile $B_1 + B_2$ du signal initial, les spectres élémentaires du signal échantillonné xy en sortie du convertisseur 3b qui sont compris dans les intervalles fréquentiels [$- f_0 + k.f_e - B_2$, $- f_0 + k.f_e + B_1$] et [$f_0 - k.f_e - B_1$, $f_0 - k.f_e + B_2$] ne doivent pas se chevaucher, où k est un nombre entier quelconque positif ou négatif. En particulier, aux basses fréquences, deux spectres élémentaires centrés sur des fréquences $-f_0+h.f_e$ et $f_0-h.f_e$, où h est un nombre entier, ne se recouvrent pas tout en étant situés symétriquement par rapport à l'axe à fréquence nulle.

Comme montré à la figure 4, la fréquence d'échantillonnage doit être déterminée de sorte que les spectres élémentaires déduits du spectre centré sur la fréquence $-f_0$ par des translations de $\pm kf_e$ ne recouvrent pas les spectres élémentaires déduits du spectre centré sur $f_0$ par des translations $\pm kfe$. Au niveau du spectre utile [$+f_0-B_1$, $+f_0+B_2$], ce défaut de recouvrement est traduit par les inéquations suivantes :

$$- f_0 + k.f_e + B_1 \leq f_0 - B_1,$$

et

$$f_0 + B_2 \leq - f_0 + (k+1)\, f_e - B_2,$$

soit :

$$k.f_e - 2\,(f_0 - B_1) \leq 0,$$

et

$$(k+1)f_e - 2(f_0 + B_2) \geq 0.$$

Ces deux inéquations se résument à :

$$2(f_0 + B_2)/(k+1) \leq f_e \leq 2(f_0 - B_1)/k.$$

En reprenant le rapport $f_e = 4f_1$ selon l'exemple ci-dessus relatif au convertisseur analogique-numérique 3a dans le démodulateur connu montré à la figure 2, la fréquence $f_1$ de la porteuse souhaitée doit satisfaire les inégalités suivantes :

$$(f_0 + B_2)/[2(k+1)] \le f_1 \le (f_0 - B_1)/(2k)$$

soit pour $B_1 = B_2 = B = 3$ MHz :

$$46,75/[2(k+1)] \le f_1 \le 40,75/(2k) \text{ MHz.}$$

En choisissant k = 3, la fréquence de porteuse $f_1$ est comprise dans l'intervalle [5,84 ; 6,79] MHz dont les valeurs sont supérieures au débit maximum de symbole $f_s$.

Par ailleurs, pour satisfaire une transposition de fréquence antérieurement dans le mélangeur 2a, la fréquence de porteuse $f_1$ dépend de la fréquence intermédiaire $f_0$ selon la relation :

$$f_0 + m.f_e = \pm f_1$$

où m est un nombre entier positif ou négatif déterminant la fréquence "fictive" de la transposition réalisée par le convertisseur analogique-numérique 3a. Pour les valeurs ci-dessus, on trouve pour m = 2 :

$$43,75 - 2.f_e = -f_1$$

soit $f_1 = 6,25$ MHz; et donc $f_e = 25$ MHz.

En pratique, les principales caractéristiques fréquentielles du démodulateur DM selon l'invention sont les suivantes :

- la bande passante du convertisseur analogique-numérique 3b est supérieure à $f_0 + B_2 = 46,75$ MHz, et typiquement supérieure à 120 MHz; et
- le signal d'horloge à la fréquence d'échantillonnage $f_e = 4f_1$ est appliqué directement à une entrée d'horloge du convertisseur 3b par le circuit de récupération de porteuse et de rythme 4b, un signal de remise à zéro de comptage et à tension minimale OFFSET étant appliqué au convertisseur analogique-numérique par le circuit de conversion et de filtrage passe-bas.

Le signal à la fréquence d'échantillonnage $f_e$ est établi par une division par 2 dans le diviseur de fréquence par 2, 41a, recevant un signal d'horloge à la fréquence $X = 2f_e = 50$ MHz produit par l'oscillateur local 40. Un circuit de synchronisation d'horloge 41 produit divers signaux d'horloge à partir du signal à la fréquence d'oscillateur $2f_e$ notamment pour les filtres adaptés 44 et les filtres d'interpolation 43.

Les filtres d'interpolation 43 reçoivent des signaux d'axes orthogonaux au débit $4.f_1 \ge 4.f_s$ depuis le circuit de conversion 42 auquel est appliqué le signal échantillon xy sortant du convertisseur 3a. Les deux signaux numériques d'interpolation en sortie des filtres 43 sont à une fréquence $2f_s$ et sont filtrés par les filtres adaptés 44 en des signaux de symbole x et y au débit de symbole $f_s$ appliqués à un égaliseur adaptatif 45 mettant en oeuvre un algorithme d'adaptation aux caractéristiques du milieu de transmission entre émetteur et récepteur pour éliminer les distorsions dans le signal démodulé. L'égaliseur 45 est suivi d'un circuit de synchronisation de porteuse 46 et d'un décodeur 47. Les deux signaux d'axe égalisés x et y à $2^n$ états sont décodés dans le décodeur 47 par comparaison à des seuils de décision, en un signal de données récupéré DATA, le décodeur commandant par un signal CAG le gain dans l'amplificateur 14 (figure 1) dans le circuit 1.

Selon un autre exemple numérique, la fréquence intermédiaire $f_0$ est 36,125 MHz avec une bande de fréquence utile $B_1 + B_2 = 2B = 8$ MHz et un débit maximum de symbole $f_s = 6,95$ Mbaud. Il correspond pour k = 2 et m = 1, les fréquences $f_1 = 7,225$ MHz et $f_e = 28,9$ MHz.

## Revendications

1. Démodulateur (DM) recevant un signal analogique (IF) à une fréquence porteuse intermédiaire ($f_0$) résultant d'une

modulation de deux composantes en quadrature d'une porteuse par des symboles à une fréquence de symbole ($f_s$) variable et comprenant un unique convertisseur analogique-numérique (3b) suivi d'un moyen de récupération de porteuse et de rythme (4b) auquel un signal numérique de symbole (xy) à décoder est appliqué par le convertisseur, **caractérisé en ce que** le convertisseur analogique-numérique (3b) est adapté à échantillonner le signal analogique (IF) à la fréquence porteuse intermédiaire ($f_0$) à une fréquence d'échantillonnage fixe ($f_e$) inférieure à la fréquence porteuse intermédiaire ($f_0$) et supérieure au moins au double d'une fréquence de symbole maximale (($f_s$)$_{max}$) en ledit signal numérique de symbole (xy), la fréquence porteuse intermédiaire ($f_0$) étant indépendante de variations de la fréquence de symbole ($f_s$).

2.  Démodulateur conforme à la revendication 1, dans lequel la fréquence d'échantillonnage ($f_e$) est supérieure au quadruple de ladite fréquence de symbole maximale (($f_s$)$_{max}$).

3.  Démodulateur conforme à la revendication 1 ou 2, dans lequel la fréquence d'échantillonnage $f_e$ est telle que :

$$2(f_0+B_2)/(k+1) \leq f_e \leq 2(f_0-B_1)/k,$$

où $f_0$ est la fréquence porteuse intermédiaire, $f_0 - B_1$ et $f_0 + B_2$ sont les fréquences minimale et maximale de la bande de fréquence utile $B_1 + B_2$ du signal de symbole, et k est un nombre entier.

4.  Démodulateur conforme à l'une quelconque des revendications 1 à 3, dans lequel la fréquence d'échantillonnage $f_e$ et la fréquence porteuse intermédiaire $f_0$ sont liées par la relation :

$$f_0 + m.f_e = \pm (f_e/4)$$

où m est un nombre entier.

5.  Démodulateur conforme à l'une quelconque des revendications 1 à 4, dans lequel la fréquence d'échantillonnage ($f_e$) est produite dans le moyen de récupération de porteuse et de rythme (4b) par un moyen (41 ; 41a) divisant par 2 la fréquence d'un signal d'horloge local en la fréquence d'échantillonnage.

6.  Démodulateur conforme à l'une quelconque des revendications 1 à 5, dans lequel le moyen de récupération de porteuse et de rythme est un circuit numérique (4b) qui comprend un moyen (42, 43, 44) pour convertir des échantillons à une fréquence multiple de la fréquence de symbole sortant du convertisseur analogique-numérique (3b) en des signaux de symbole (x, y) à la fréquence de symbole, un moyen (45) pour égaliser les signaux de symbole en des signaux de symbole égalisés, et un moyen numérique (46) recevant les signaux de symbole égalisés pour récupérer la porteuse.

**Patentansprüche**

1.  Demodulator (DM), der ein analoges Signal (IF) mit einer Zwischenträgerfrequenz ($f_0$) empfängt, das aus einer Modulation zweier um 90° phasenverschobener Komponenten eines Trägers durch Symbole mit einer variablen Symbolfrequenz ($f_s$) resultiert, und umfassend einen einzelnen Analog-Digital-Umsetzer (3b) gefolgt von einem Mittel zur Träger- und Taktrückgewinnung (4b), auf das vom Umsetzer ein zu dekodierendes digitales Symbolsignal (xy) angewandt wird, **dadurch gekennzeichnet, dass** der Analog-Digital-Umsetzer (3b) in der Lage ist, das analoge Signal (IF) mit der Zwischenträgerfrequenz ($f_0$) mit einer feststehenden Abtastfrequenz ($f_e$) abzutasten, die niedriger ist als die Zwischenträgerfrequenz ($f_0$) und höher als mindestens das Doppelte einer maximalen Symbolfrequenz (($f_s$)$_{max}$) in dem genannten digitalen Symbolsignal (xy), wobei die Zwischenträgerfrequenz ($f_0$) unabhängig von Veränderungen der Symbolfrequenz ($f_s$) ist.

2.  Demodulator nach Anspruch 1, in dem die Abtastfrequenz ($f_e$) höher ist als das Vierfache der genannten maximalen Symbolfrequenz (($f_s$)$_{max}$).

3.  Demodulator nach Anspruch 1 oder 2, in dem die Abtastfrequenz ($f_e$) folgende Eigenschaft hat:

$$2\ (f_0+B_2)\ /\ (k+1)\ \le\ f_e\ \le\ 2\ (f_0-B_1)\ /\ k,$$

wobei $f_0$ die Zwischenträgerfrequenz ist, $f_0 - B_1$ und $f_0 + B_2$ die minimale und maximale Frequenz des verwendbaren Frequenzbandes $B_1 + B_2$ des Symbolsignals sind, und k eine ganze Zahl ist.

4. Demodulator nach einem der Ansprüche 1 bis 3, in dem die Abtastfrequenz ($f_e$) und die Zwischenträgerfrequenz ($f_0$) durch folgende Relation miteinander verbunden sind:

$$f_0\ +\ m.f_e\ =\ \pm\ (f_e/4),$$

wobei m eine ganze Zahl ist.

5. Demodulator nach einem der Ansprüche 1 bis 4, in dem die Abtastfrequenz ($f_e$) in dem Mittel zur Träger- und Taktrückgewinnung (4b) von einem Mittel (41; 41a) erzeugt wird, das die Frequenz eines lokalen Taktsignals in der Abtastfrequenz durch 2 dividiert.

6. Demodulator nach einem der Ansprüche 1 bis 5, in dem das Mittel zur Träger- und Taktrückgewinnung eine Digitalschaltung (4b) ist, die Folgendes umfasst: ein Mittel (42, 43, 44), um die Abtastwerte mit einer multiplen Frequenz der Symbolfrequenz, die aus dem Analog-Digital-Umsetzer (3b) stammen, in Symbolsignale (x, y) mit der Symbolfrequenz umzuwandeln; ein Mittel (45), um die Symbolsignale in entzerrte Symbolsignale zu entzerren; und ein digitales Mittel (46), das die entzerrten Signale zur Trägerrückgewinnung empfängt.

**Claims**

1. A demodulator (DM) for receiving an analog signal (IF) at an intermediate carrier frequency ($f_0$) resulting from modulation of two quadrature components of a carrier by symbols at a variable symbol frequency ($f_s$) and comprising a single analog-to-digital converter (3b) followed by carry and timing recovery means (4b) to which a digital symbol signal (xy) to be decoded is fed by the converter, **characterized in that** the analog-to-digital converter (3b) is adapted to sample the analog signal (IF) at the intermediate carrier frequency ($f_0$) at a fixed sampling frequency ($f_e$) less than the intermediate carrier frequency ($f_0$) and greater than at least twice a maximal symbol frequency ($(f_s)_{max}$) to produce said digital symbol signal (xy), the intermediate carrier frequency ($f_0$) being independent of variations in the symbol frequency ($f_s$).

2. The demodulator according to claim 1, wherein the sampling frequency ($f_e$) is greater than four times said maximal symbol frequency ($(f_s)_{max}$).

3. The demodulator according to claim 1 or 2, wherein the sampling frequency $f_e$ is such that:

$$2(f_0 + B_2)/(k+1)\ =\ f_e\ =\ 2\ (f_0-B_1)/k$$

where $f_0$ is the intermediate carrier frequency, $f_0 - B_1$ and $f_0 + B_2$ are minimal and maximal frequencies of the useful frequency band $B_1 + B_2$ of the symbol signal, and k is an integer.

4. The demodulator according to any one of claims 1 to 3, wherein the sampling frequency $f_e$ and the intermediate carrier frequency $f_0$ are linked by the relationship:

$$f_0\ +\ m.f_e\ =\ \underline{+}\ (f_e/4)$$

where m is an integer.

5. The demodulator according to any one of claims 1 to 4, wherein the sampling frequency ($f_e$) is produced in the timing and carrier recovery means (4b) by means (41 ; 41a) dividing by 2 the frequency of a local clock signal to produce the sampling frequency.

6. The demodulator according to any one of claims 1 to 5, wherein the carrier and timing recovery means is a digital circuit (4b) which comprises means (42, 43, 44) for converting samples at a frequency that is a multiple of the symbol frequency leaving the analog-to-digital converter (3b) into symbol signals (x, y) at the symbol frequency, means (45) for equalizing the symbol signals to produce equalized symbol signals, and digital means (46) receiving the equalized symbol signals to recover the carrier.

**FIG.1**
(TECHNIQUE ANTERIEURE)

DEMODULATEUR

CIRCUIT D'AMPLIFICATION ACCORDE

CIRCUIT DE RECUPERATION DE PORTEUSE ET DE RYTHME

RF — 10 — 11 — 12 — 13 — 14 (CAG) — IF($f_0$) — 2X — X — 3X — A/N — XE — 4 — DATA — 2Y — Y — 3Y — A/N — YE — VCXO — 31 — 33 — $\pi/2$ — 22 — 21 — VCO — 23

**FIG.2**
(TECHNIQUE ANTERIEURE)

DEMODULATEUR

CIRCUIT D'AMPLIFICATION ACCORDE

CIRCUIT DE RECUPERATION DE PORTEUSE ET DE RYTHME

RF — IF($f_0$) — 2a — IS($f_s$) — 3a — A/N — XY — 4a — DATA — $4f_s$ — VCXO — 31a — $f_t < f_0$ — 21a — VCO

EP 0 917 790 B1

## FIG.3

$f_0 > f_e \geqslant (4f_s)_{max}$

DM

CIRCUIT D'AMPLIFICATION ACCORDE — 1

IF($f_0$)

A/N — 3b

$f_e$

xy

vers 14

OFFSET

CONVERSION $\times$ $\sim$ — 42

FILTRES D'INTERPOLATION — 43

FILTRES ADAPTES — 44

$x(f_s)$

EGALISEUR — 45

SYNC. DE PORTEUSE — 46

DECODEUR

CAG

DATA

$y(f_s)$

47

$\div 2$ — 41

SYNC D'HORLOGE — 48

OSCILLATEUR X=2fe — 40

CIRCUIT DE RECUPERATION DE PORTEUSE ET DE RYTHME

4b

## FIG.4

module spectral

$B_2$ $B_1$

2B

2B

$B_1$ $B_2$

fréquence

$f_0-(k+1)f_e$

$-f_0$

$f_0-kf_e$

$-f_0+f_e$

$f_0-hf_e$

$-f_0+hf_e$

$f_0-f_e$

$f_0$

$-f_0+(k+1)f_e$

$-f_0-B_2$

$-f_0+B_1$

$-f_0+(h-1)f_e$

$f_0-(h-1)f_e$

$-f_0+kf_e$

$f_0-B_1$

$f_0+B_2$

$-f_0+kf_e+B_1$

$-f_0+(k+1)f_e-B_2$